# EUROPEAN PATENT SPECIFICATION

(11) **EP 2 959 953 B1**
(45) Date of publication and mention of the grant of the patent: **09.11.2016**
(21) Application number: 15162177.8
(22) Date of filing: 01.04.2015
(51) Int. Cl.: B01D 35/02, B01D 29/52, E03B 7/07, B01D 35/30, B01D 29/11, B21C 23/14

(54) **MANIFOLD HEAD FOR A FLUID CONDITIONING COLUMN**
VERTEILER FÜR EINE FLÜSSIGKEITSKONDITIONIERUNGSSÄULE
TÊTE DE DISTRIBUTEUR POUR UNE COLONNE DE CONDITIONNEMENT DE FLUIDE

(30) Priority: 04.06.2014 GB 201409903
(43) Date of publication of application: 30.12.2015
(73) Proprietor: Walker Filtration Limited, Washington Tyne and Wear NE38 9DA (GB)
(72) Inventor: Walker, Brian, Hexham, Northumberland NE46 4LX (GB)
(74) Representative: Gill, Stephen Charles

(56) References cited:
- EP-A1- 2 848 297
- WO-A1-99/30803
- WO-A1-2012/153431
- GB-A- 2 408 223

## Description

### Field of the Invention

The present invention relates to a manifold head for a fluid conditioning column.

### Background of the Invention

Most in-line filter columns for liquids and gases use a two-piece column having a manifold head for connecting to the process inlet and outlet pipe work, and an elongate container, typically in the form of a tubular filter bowl, containing the filtering component. Inlet and outlet ports of the manifold head are normally opposite each other and coaxial. The fluid flows into the manifold through the inlet port, through the filtering component and then out through the outlet port.

The filtering component is typically material of tubular shape extending into the filter bowl and is of a smaller diameter than the internal diameter of the filter bowl, thereby forming an annular gap for fluid to flow freely along the length of the filtering material and to or from the surface thereof. The fluid flow can be either be inwardly or outwardly directed through the filtering material.

Filter components are multi-various, but can include: water separation devices, particulate and coalescing cartridges, sorbent cartridges and columns, membranes in pleated, wrapped and tubular bundles or any combination thereof. Indeed, filter columns are just an example of a more general class of fluid conditioning columns. The conditioning components of such columns can be cyclonic separators, fluid heaters, fluid coolers etc.

In order for the manifold head of such a column to operate effectively, the manifold may have an internal flow guidance formation, usually with a 90° elbow arrangement, which directs the flow centrally into or out of the conditioning component en route from or to one of the ports. Surrounding a portion of the flow guidance formation a, typically kidney-shaped, slot connects with the other one of the ports thus allowing the free passage of fluid from or to the annular gap at the outside of the conditioning component.

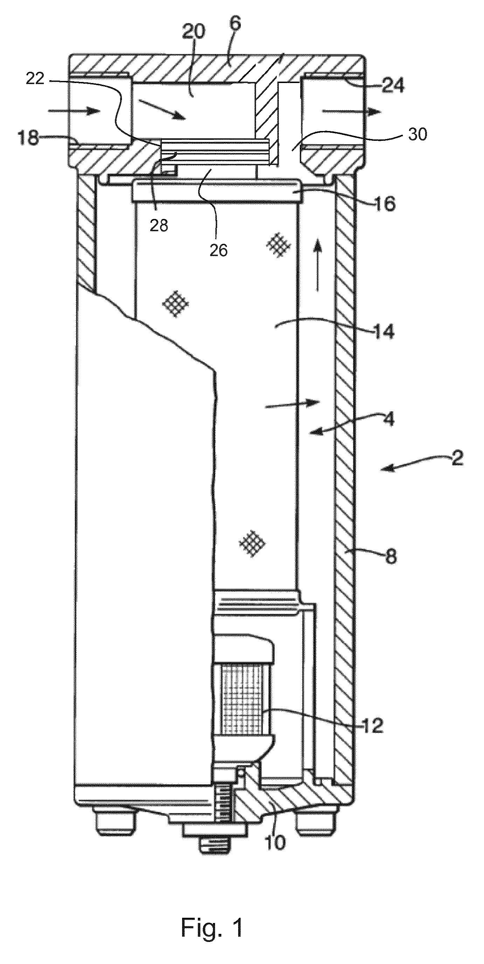

For example Figure 1 is a front view partly in vertical section of a filter column 2 of known type which includes a filter bowl 8, a manifold head 6 sealingly assembled to the bowl 2, and a bottom end cap 10, the bowl 2 containing a filter element 4 and a condensate drain 12.

The filter element 4 includes a conventional body 14 of annular configuration, and a top end cap 16.

The manifold 6 includes an inlet port 18 that feeds into a conduit extent 20 formed within the manifold 6 and which terminates in a cylindrical sealing surface 22 within the manifold 6. The manifold 6 also includes an outlet port 24 axially aligned with the inlet port 18.

The end cap 16 of the filter element 4 includes a second conduit extent 26 of circular transverse section feeding centrally therefrom and terminating in an annular rim 28 having O-ring seals which mate with the sealing surface 22 within the manifold 6. In this way, the first and second conduit extents 20, 26 combine to constitute an elbow shaped conduit interconnecting the inlet port 18 with the hollow interior of the annular body 14 of the filter element 4.

In use, fluid to be filtered, for example gas containing contaminants in aerosol, liquid or solid particulate form, is fed to the inlet port 18 and flows through the column 2 as shown by the arrows in Figure 1. The fluid flows through the elbow shaped conduit formed by the extents 20, 26 and into the hollow interior of the filter element 4. The fluid passes through the material of the body 14 and into the annular volume between the filter element 4 and the filter bowl 8. It then passes through a kidney-shaped slot 30 formed in the manifold head 6 around the sealing surface 22 , and exits the column as clean fluid through the outlet port 24. The condensate drain 12 ensures that bulk liquid contamination removed from a gas stream can be readily removed from the column. The direction of flow of the fluid through the column could be reversed if considered beneficial under particular circumstances. Conventional manifolds are usually cast in metal, although some are injection moulded in plastic or machined from solid bar stock.

A problem with metal castings is porosity, which may not be detected until additional and costly post-processing, such as machine work, has been carried out. Macro porosity can usually be seen by the naked eye, but more common is micro porosity which can only be detected by further processes such bubble testing with compressed air or ultrasonic testing, both of which add cost to the manufacturing process. Furthermore, additional costs can also be incurred should corrective post-treatments such as resin impregnation be required to rectify this porosity. WO-A-9930803 describes a housing body section for treatment columns, which is manufactured by extrusion, followed by machining.

A further problem with castings when used for pressure purposes is that additional material may be required under pressure vessel rules to take into account the inherent variation in components produced by the casting method. These rules may also stipulate the types of material which can be used. As the rules can vary from country to country, they raise another problem of identifying casting vendors capable of manufacturing to the required material standards.

It would be desirable to provide a manifold head for a fluid conditioning column that overcomes or mitigates these problems.

### Summary of the Invention

Accordingly, in a first aspect, the present invention provides a manifold head according to claim 1.

Advantageously, because extrusions are generally non-porous, the processes of porosity testing and post-testing corrective processing can be eliminated, yielding significant cost savings. A further advantage is that the quality of a machined surface finish that can be obtained from an extrusion is generally better than can be obtained from a casting. If the extrusion is formed e.g. of aluminium alloy, the inside and outside of the manifold head can also be anodized for corrosion protection, and optionally with a colouring finish.

Optional features of the first aspect of the invention will now be set out. These are applicable singly or in any combination.

The conditioning component can be e.g. a purifying component, a separating component (such as in gas generation applications), a heating component, or a cooling component. The fluid can be a gas, a liquid, or a gas liquid mixture

Conveniently, the elongate container can be a tubular purification bowl. The container can also be formed from an extrusion.

The extruded body section has radially spaced and substantially tubular outer and inner walls which are bridged by a bridging portion, the inner wall forming a central bore, the outer wall forming the external wall of the manifold head, and the inner wall and bridging portion forming the internal flow guidance formation. Thus the central bore can communicate with the centre of the conditioning component, and the space between the outer and inner walls can communicate with the exterior of the conditioning component. Conveniently the inlet and outlet ports are formed in the tubular outer wall. For example, the inlet and outlet ports are formed by machining respective passages in the outer wall, one of the passages passing through the outer wall to open to the truncated annular space formed between the outer and inner walls, and the other passage passing through the outer wall, bridging portion and inner wall to open to the central bore.

Typically, the unitary extruded body section has an extrusion direction which, when the manifold head is assembled to the container, is parallel with the axis of the column. The centre lines of the inlet and outlet ports may be perpendicular to the extrusion direction.

The inlet and outlet ports may be at diametrically opposed positions across the manifold head, although another option is for the inlet and outlet ports to be at 90° to each other around the manifold head. The manifold head can have multiple inlet and/or multiple outlet ports.

The manifold head may have a sealable connecting formation for removably assembling the manifold head to the end of the container, and many types of connecting formation are known in the art such as a screw thread or bayonet fixing. The connecting formation can be formed by machining the extruded body section.

The manifold head may be formed of extruded metal, such as aluminium alloy. Other options are to form the head from extruded magnesium alloy, titanium alloy, steel or plastic. The manifold head may have a sealing cap to seal the side of the extruded body section distal from the container. For example, the sealing cap can seal the above-mentioned space between the outer and inner walls and central bore at the distal side.

Another option, however, is to connect two containers to opposite sides of the manifold head, thereby doubling the conditioning capacity at the head.

Accordingly, in a second aspect, the present invention provides a pair of fluid conditioning columns which each includes an elongate container which in use contains a respective conditioning component such that fluid can be conditioned by flow through the conditioning component, the pair of columns further having a shared manifold head of the first aspect (which may have any of the optional features of the first aspect, whether singly or in any combination) sealingly assembled to ends of the columns;
wherein the containers are at opposite sides of the extruded body section such that the columns share the external wall, inlet port, outlet port, and internal flow guidance formation of the manifold head.

Another option is to provide a multi-manifold head for a multi-column arrangement, in which two or more, typically side-by-side, columns share the same multi-manifold head.

Accordingly, in a third aspect, the present invention provides a multi-manifold head for a plurality of columns in each of which fluid is conditioned by flow through a respective conditioning component, the multi-manifold head incorporating a plurality of the manifold heads according to the first aspect (which may have any of the optional features of the first aspect, whether singly or in any combination) such that each manifold head is, in use, sealingly assembled to an end of a respective container, and each manifold head has a respective external wall, inlet port, outlet port, and internal flow guidance formation;
wherein the extruded body sections of the manifold heads are constituent parts of an over-arching unitary extruded body section.

Advantageously, multi-manifold head allow the possibility of employing a single set-up for machining, thus cutting down on machining costs relative to machining individual manifold heads. Multi-manifold head can also cut down on potential leak paths when building multi column combinations. This can be particularly significant for gas generation and other critical systems where any loss of valuable product should be minimised and/or may pose a safety concern.

Optional features of the third aspect of the invention will now be set out. These are applicable singly or in any combination.

The inlet and outlet ports may be arranged such that there is no fluid flow from one column to another. Preferably, however, the ports are arranged so that the outlet port of one column directs fluid to the inlet port of a neighbouring column. The columns can thus condition the fluid in series.

For example, as each manifold head has the radially spaced and substantially tubular outer and inner walls which are bridged by the bridging portion, and the inlet and outlet ports of that column are formed by machining the respective passages, then, as between neighbouring columns, the passage forming the outlet port for one column may be shared by the neighbouring column such that it forms the inlet port for the neighbouring column. In this case, one or more additional machined passages may be formed in the over-arching extruded body section to provide machine access to form the or each shared passage, the additional machined passage(s) being closed by respective plugs.

In a fourth aspect, the present invention provides a fluid conditioning column including:
an elongate container which in use contains a conditioning component such that fluid can be conditioned by flow through the conditioning component; and
a manifold head according to the first aspect (which may have any of the optional features of the first aspect, whether singly or in any combination) which is sealingly assembled to an end of the container.

In a fifth aspect, the present invention provides a plurality of fluid conditioning columns which each includes an elongate container which in use contains a respective conditioning component such that fluid can be conditioned by flow through the conditioning component, the plurality of conditioning columns further having the multi-manifold head according to the third aspect (which may have any of the optional features of the third aspect, whether singly or in any combination) sealingly assembled to the ends of the containers.

In a sixth aspect, the present invention provides a method of producing the manifold head of the first aspect (which may have any of the optional features of the first aspect, whether singly or in any combination) including:
providing a unitary extruded body section having the external wall and the internal flow guidance formation; and
machining the extruded body section to form the inlet port and the outlet port.

In a seventh aspect, the present invention provides a method of producing the multi-manifold head of the third aspect (which may have any of the optional features of the third aspect, whether singly or in any combination) including:
providing an over-arching unitary extruded body section having the external walls and the internal flow guidance formations; and
machining the over-arching extruded body section to form the inlet ports and the outlet ports.

The method of sixth or seventh aspect may further include preliminary steps of: extruding and sectioning a body to form the extruded body section.

### Brief Description of the Drawings

Embodiments of the invention will now be described by way of example with reference to the accompanying drawings in which:
For example Figure 1 is a front view partly in vertical section of a filter column of known type;
Figure 2 shows a transverse section through such an extruded body section;
Figure 3 shows a longitudinal section on plane A-A of Figure 2;
Figure 4 show a corresponding section that of Figure 2, but after machining of the extruded body section to form a manifold head;
Figure 5 show a corresponding section that of Figure 3, but after machining of the extruded body section to form the manifold head;
Figure 6 shows a close up view of a port of the manifiold head of Figures 4 and 5, the port having optional joining and sealing features;
Figure 7 shows a close up view of a mounting bracket slot incorporated into a multi-manifold head;
Figure 8 shows the manifold head on the section of Figure 5, but further machined for assembling to a filter bowl and a sealing cap; and
Figure 9 shows a transverse section through a unitary extruded body section which can be used to make two permanently connected manifold heads for two side-by-side columns, the extruded body section (a) being in the as-extruded state, (b) having passages machined therein for the formation of ports, and (c) having one of the passages plugged to prevent a flow short-circuit.

### Detailed Description and Further Optional Features of the Invention

The present invention provides a manifold head for a conditioning column formed from a unitary extruded body section. In the following we refer to a column having an elongate container in the form of a tubular filter bowl for containing a filter element. However, the column can have an elongate container containing other types of conditioning component such as separators, fluid heaters, fluid coolers etc.

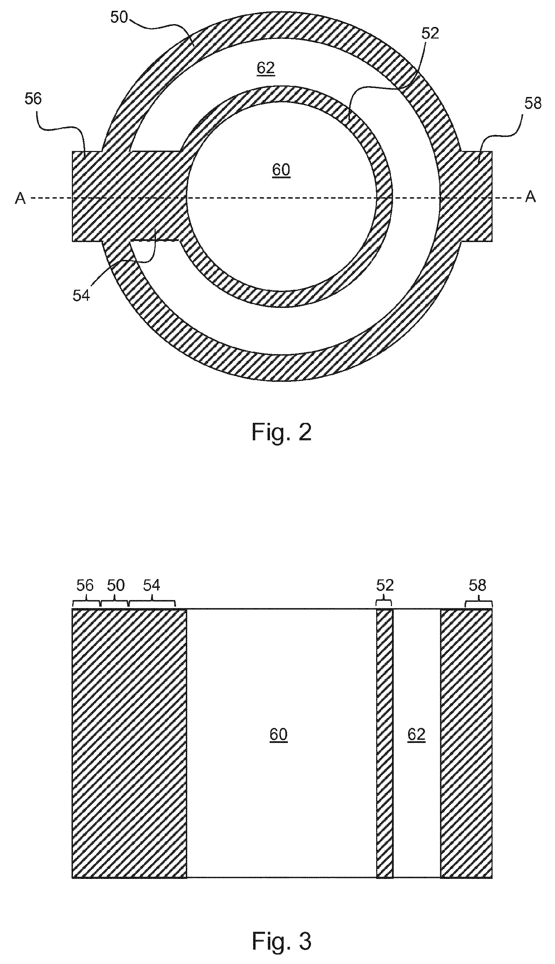

Figure 2 shows a transverse section through such an extruded body section, which may typically be formed of aluminium alloy, and Figure 3 shows a longitudinal section on plane A-A of Figure 2. The extruded body section is formed by cutting lengths from a longer extrudate. The extrusion direction is perpendicular to the plane of the section in Figure 2 and in the vertical direction in the section of Figure 3.

The extruded body section has "tube-in-tube" configuration comprising radially spaced, outer 50 and inner 52 tubular walls. These are bridged by a bridging portion 54 at one sector of the walls. A first protrusion 56 projects from the outer wall 50 at the other side of the wall to the bridging portion 54, and a second protrusion 58 projects from the outer wall 50 at a diametrically opposed position. A central bore 60 is formed by the inner wall 52 and a truncated annular space 62 is formed between the outer 50 and inner 52 walls.

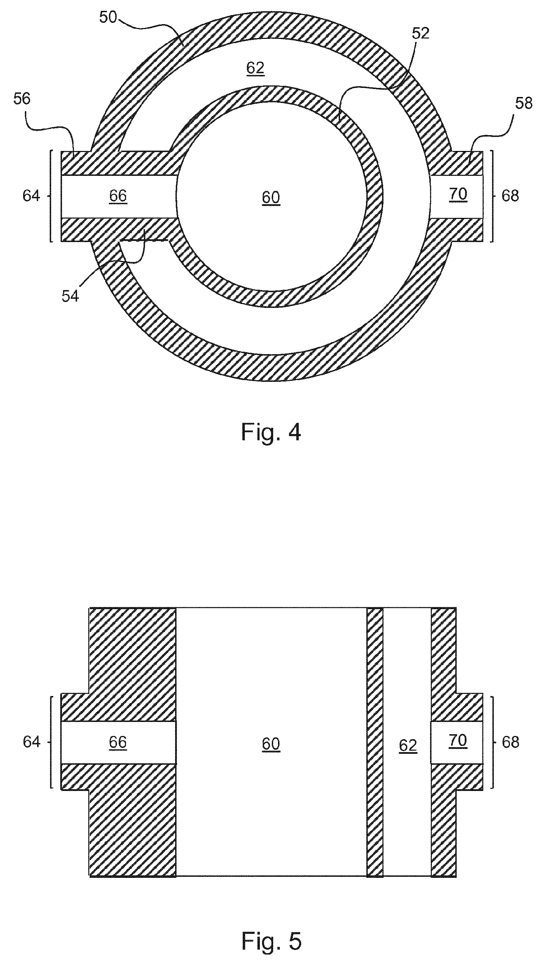

Figures 4 and 5 shows corresponding sections to those of Figures 2 and 3, but after machining of the extruded body section to form the manifold head. In particular, a first port 64 is formed by machining a first passage 66 through the first protrusion 56, outer wall 50, bridging portion 54 and inner wall 52 to open to the central bore 60. A second port 68 is formed by machining a second passage 70 through the second protrusion 58 and the outer wall 50 to the truncated annular space 62. Depending on the direction of flow through the column, the first port can be the inlet port and the second port the outlet port, or vice versa.

The first 56 and second 58 protrusions are also machined to leave a ring or square of projecting material around the respective port 64, 68. This can facilitate the connection of the ports to associated pipework. Other options are to leave the protrusions un-machined, or to mill slots in the protrusions to accept wedge connectors.

Advantageously, the manifold head formed from a unitary extruded body section can have improved pressure-tightness relative to a cast head as extrusions are generally free of porosity. Further, extrusions can provide a good machined finish. Aluminium alloy extrusions can also be anodised.

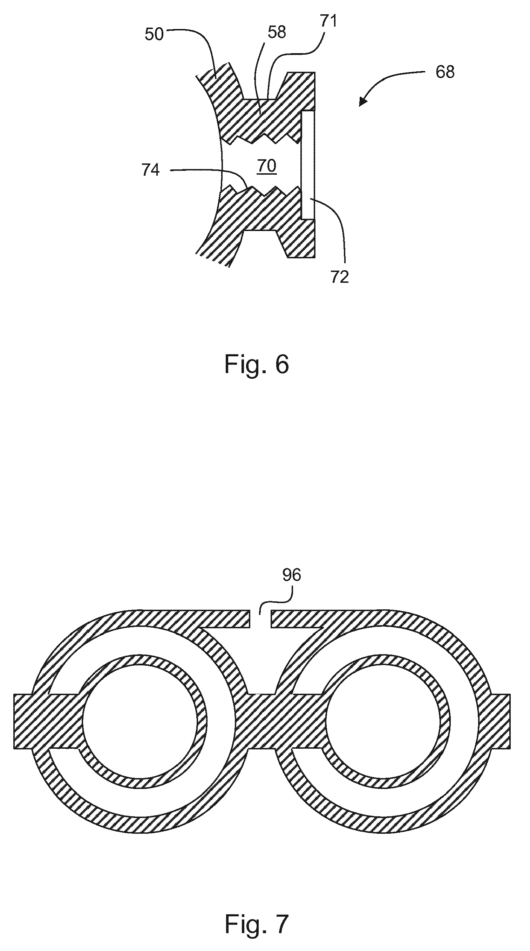

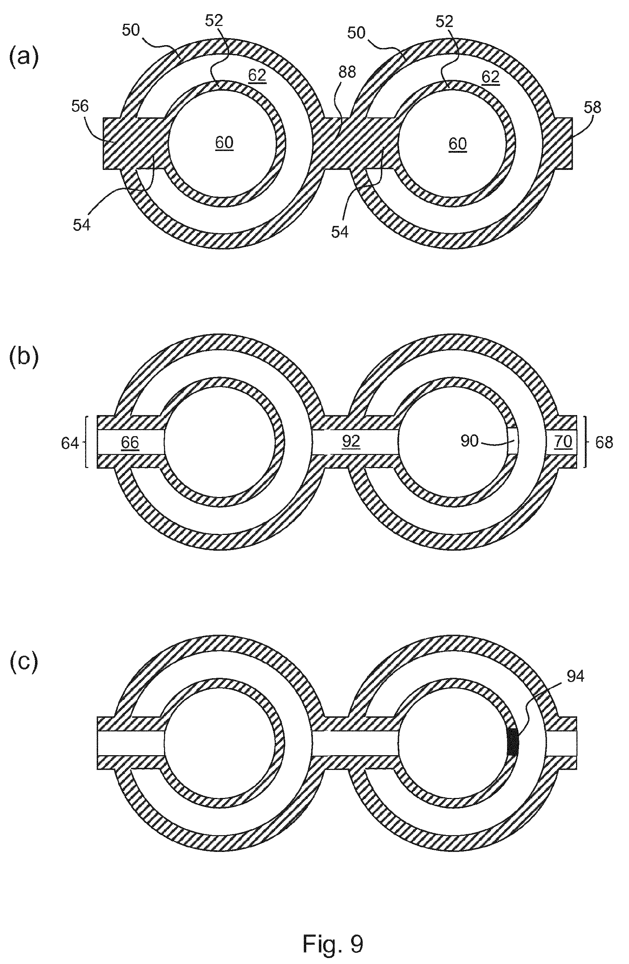

The extruded body section can be readily adapted to provide the manifold head with further or different features. For example:
- The first 56 and second 58 protrusions can be eliminated so that the mouths of the ports 64, 68 are flush with the external surface of the outer all 50.
- Additional material can be incorporated into the extrusion, e.g. at the inner surface of the outer wall adjacent the second port 70, providing greater depth of material for a pipe threads.
- The ports 64, 68 can be located at different relative positions around the manifold head, and/or can be machined at different angles relative to the axis of the column.
- Flanges can be machined or slots 71 to accept wedge connectors can be readily incorporated into the outer wall of the extrusion around the mouths of the ports 64, 68 to facilitate fixing to adjacent pipework or to connect additional units, as shown in Figure 6.
- Spot faces 72 can be machined at the mouths of the ports 64, 68 to facilitate location of sealing gaskets, as also shown in Figure 6.
- Internal 74 or external joining threads can be machined on each port, as also shown in Figure 6.
- Features, such as a mounting bracket slot 96 shown in Figure 7, can be readily incorporated (the extrusion in this case is for a multi-manifold head, described below in more detail in relation to Figure 9).

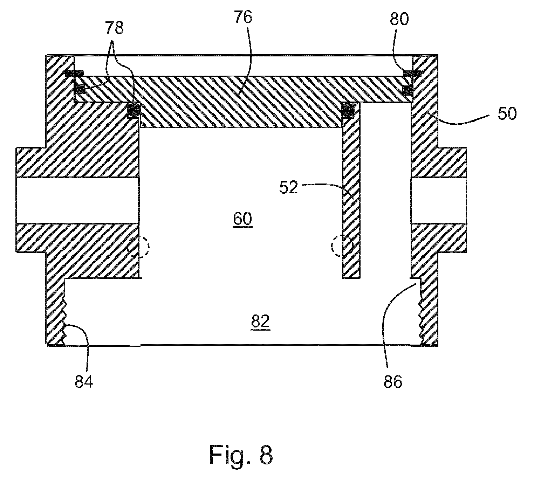

Figure 8 shows the manifold head on the section of Figure 5, but further machined for assembling to a filter bowl, and a sealing cap in the form of a pressure retaining plug 76.

More particularly, one end of the head is machined to provide a recess for the plug, which is sealed to inner surfaces of the outer 50 and inner 52 walls by O-rings 78, and held in place with a circlip 80.

At the other end of the head, a further recess 82 is formed extending radially to a threaded region 84 formed in the inner surface of the outer wall 50. The filter bowl of the column can then be threadingly attached to manifold head at this region, a further region 86 being formed in the inner surface of the outer wall 50 above the threaded region 84 to accommodate a sealing element, such an O-ring, for sealing the bowl to the head. Another option, however, is to sealingly assemble filter bowls at both sides of the head, thereby doubling the head's flow filtering capacity. This can be achieved by machining filter bowl recesses at both ends of the head, rather than a plug recess at one end and a filter bowl recess at the other.

The outer wall 50 is the pressure envelope of the manifold head. The inner wall 52, on the other hand, is used to attach to the conditioning component. This can be achieved, for example, by providing a conduit projecting upwards into the central bore 60 from an end cap of the filter element component, the conduit being sealed to the internal surface of the inner wall 52 by one or more O-rings, e.g. at the position indicated by dashed circles in Figure 8.

The concept of forming a manifold head from an extruded body section can be extended to form a multi-manifold head for a plurality of columns. Although discussed below in the context of a bi-manifold head, multi-manifold heads can be produced for three or four or more columns.

Figure 9(a) shows, by way of example, a transverse section through a unitary extruded body section which can be used to make two permanently connected manifold heads for two side-by-side columns. The extruded body section over-archingly combines the features of two extruded body sections of the example of Figures 2 to 8. As discussed in more detail below, the multi-manifold head allows the outlet port of one column to feed directly and permanently into the inlet port of the other column so that fluid can pass through the columns in series for sequential conditioning. Purely by way of example, the upstream manifold head can be used with a column which removes liquid and particulate from compressed air, and the downstream head can be used with a column which contains a heater for heating the filtered air. Advantageously, permanently connected manifold heads have fewer potential leak paths than non-permanently connected heads.

In Figure 9(a), reference numbers are given to features of the extruded body section according to the reference numbers given to equivalent features of Figure 2. Thus both left and right hand halves of the extruded body section, corresponding to left and right manifold heads, have outer 50 and inner 52 tubular walls, a bridging portion 54, a central bore 60 and a truncated annular space 62. The left hand manifold head also has a first protrusion 56 and the right hand manifold head has a second protrusion 58. However, in place of further first and second protrusions, a common linking portion 88 permanently joins the two heads.

As shown in Figure 9(b), the left hand manifold head is provided with a first port 64 by machining a first passage 66 through the first protrusion 56, outer wall 50, bridging portion 54 and inner wall 52 of that head. Similarly, the right hand manifold head is provided with a second port 68 by machining a second passage 70 through the second protrusion 58 and outer wall 50 of that head.

Using the second passage 70 as access, third 90 and fourth 92 passages in-line with the second passage are also machined. The third passage 90 passes through the inner wall 52 of the right hand head, while the fourth passage 92 passes through the inner wall 52, bridging portion 54 and outer wall 50 of the right hand head, the linking portion 88, and the outer wall 50 of the left hand head. The fourth passage 92 thus connects the truncated annular space 62 of the left hand head to the central bore 60 of the right hand head, effectively creating and merging an outlet port of one head with an inlet port of the other head.

As shown in Figure 9(c), the third passage 90 can then be closed with a plug 94 to prevent a flow short-circuit between the central bore 60 and the truncated annular space 62 of the right hand head.

Another option, which reduces the number of machining steps but introduces a further plugging step, is simply to machine a bore across the entire extruded body section in one operation, thereby creating the first to fourth passages 66, 70, 90, 92, and in addition creating a fifth passage in the inner wall of the left hand head. This fifth passage and the third passage 90 can be closed with respective plugs. Alternatively, the open passages can be sealed and/or plugged by the end cap of the conditioning element via the use of an angular sealing arrangement such as that described by GB A 2408223.

## Claims

1. A manifold head for a column in which fluid is conditioned by flow through a conditioning component, the column including the manifold head and an elongate container for the conditioning component, in use the manifold head being sealingly assembled to an end of the container;
wherein the manifold head has an external wall (50), an inlet port (64) for incoming flow of fluid into the column, an outlet port (68) for outgoing flow of fluid out of the column, and an internal flow guidance formation for guiding the incoming flow to the conditioning component and for guiding the outgoing flow from the conditioning component, the flow guidance formation further maintaining separation of the incoming and outgoing flows within the column en route to and from the conditioning component;
**characterised in that**:
the external wall and the internal flow guidance formation of the manifold head are constituent parts of a unitary extruded body section;
the extruded body section has radially spaced and substantially tubular outer (50) and inner (52) walls which are bridged by a bridging portion (54), the inner wall forming a central bore (60), the outer wall forming the external wall of the manifold head, and the inner wall and bridging portion forming the internal flow guidance formation; and
the inlet and outlet ports are formed by machining respective passages in the outer wall, one of the passages (70) passing through the outer wall to open to the truncated annular space (62) formed between the outer and inner walls, and the other passage (66) passing through the outer wall, bridging portion and inner wall to open to the central bore.

2. A manifold head according to claim 1, wherein the unitary extruded body section has an extrusion direction which, when the manifold head is assembled to the container, is parallel with the axis of the column;
preferably the centre lines of the inlet and outlet ports being perpendicular to the extrusion direction.

3. A manifold head according to claim 1 or 2, wherein the inlet and outlet ports are at diametrically opposed positions across the manifold head.

4. A manifold head according to any one of the previous claims which has a sealable connecting formation for removably assembling the manifold head to the end of the container.

5. A manifold head according to any one of the previous claims which is formed of extruded aluminium alloy.

6. A manifold head according to any one of the previous claims which has a sealing cap (76) to seal the side of the extruded body section distal from the container.

7. A pair of fluid conditioning columns which each includes an elongate container which in use contains a respective conditioning component such that fluid can be conditioned by flow through the conditioning component, the pair of columns further having a shared manifold head according to any one of claims 1 to 5 sealingly assembled to ends of the columns;
wherein the containers are at opposite sides of the extruded body section such that the columns share the external wall, inlet port, outlet port, and internal flow guidance formation of the manifold head.

8. A multi-manifold head for a plurality of columns in each of which fluid is conditioned by flow through a respective conditioning component, the multi-manifold head incorporating a plurality of the manifold heads according to any one of claims 1 to 6 such that each manifold head is, in use, sealingly assembled to an end of a respective container, and each manifold head has a respective external wall, inlet port, outlet port, and internal flow guidance formation;
wherein the extruded body sections of the manifold heads are constituent parts of an over-arching unitary extruded body section.

9. A multi-manifold head according to claim 8, each manifold head having the radially spaced and substantially tubular outer and inner walls which are bridged by the bridging portion, and the inlet and outlet ports of each manifold head are formed by machining the respective passages; and
wherein, as between neighbouring columns, the passage (92) forming the outlet port for one column is shared by the neighbouring column such that it forms the inlet port for the neighbouring column.

10. A multi-manifold head according to claim 8 or 9, wherein one or more additional machined passages are formed in the over-arching extruded body section to provide machine access to form the or each shared passage, the additional machined passage(s) being closed by respective plugs.

11. A fluid conditioning column including:
an elongate container which in use contains a conditioning component such that fluid can be conditioned by flow through the conditioning component; and
a manifold head according to any one of claims 1 to 6 which is sealingly assembled to an end of the container.

12. A plurality of fluid conditioning columns which each includes an elongate container which in use contains a respective conditioning component such that fluid can be conditioned by flow through the conditioning component, the plurality of conditioning columns further having a multi-manifold head according to any one of claims 8 to 10 sealingly assembled to the ends of the containers.

13. A method of producing the manifold head of any one of claims 1 to 6 including:
providing a unitary extruded body section having the external wall and the internal flow guidance formation; and
machining the extruded body section to form the inlet port and the outlet port.

14. A method of producing the multi-manifold head of any one of claims 8 to 10 including:
providing an over-arching unitary extruded body section having the external walls and the internal flow guidance formations; and
machining the over-arching extruded body section to form the inlet ports and the outlet ports.

## Patentansprüche

1. Verteilerkopf für eine Säule, in der ein Fluid durch Hindurchströmen durch eine Aufbereitungskomponente aufbereitet wird, wobei die Säule den Verteilerkopf und einen länglichen Behälter für die Aufbereitungskomponente umfasst, wobei der Verteilerkopf im Gebrauch mit einem Ende des Behälters dichtend zusammengebaut ist;
wobei der Verteilerkopf eine Außenwand (50), einen Einlassanschluss (64) für eine in die Säule eintretende Fluidströmung, einen Auslassanschluss (68) für eine aus der Säule austretende Fluidströmung und eine Innenströmungsführungsanordnung zum Führen der eintretenden Strömung hin zur Aufbereitungskomponente und zum Führen der austretenden Strömung weg von der Aufbereitungskomponente, wobei die Strömungsführungsanordnung ferner die Trennung der eintretenden und der austretenden Strömung in der Säule auf dem Weg hin zur Aufbereitungskomponente und weg von dieser aufrecht erhält;
**dadurch gekennzeichnet, dass**
die Außenwand und die Innenströmungsführungsanordnung des Verteilerkopfes Bestandteile eines einstückigen Extrusionskörperabschnitts sind; dass
der Extrusionskörperabschnitt eine äußere (50) und eine innere (52) Wand aufweist, die radial voneinander beabstandet und im Wesentlichen rohrförmig sind und die durch einen Brückenabschnitt (54) miteinander verbunden sind, wobei die innere Wand eine zentrale Bohrung (60), die äußere Wand die Außenwand des Verteilerkopfes ausbildet, und die innere Wand und der Brückenabschnitt die Innenströmungsführungsanordnung ausbilden; und dass
die Einlass- und Auslassanschlüsse durch mechanische Herstellung von entsprechenden Durchlässen in der äußeren Wand ausgebildet sind, wobei einer der Durchlässe (70) durch die äußere Wand hindurchtritt, um in einen Ringraumstumpf (62), der zwischen der äußeren und der inneren Wand ausgebildet ist, zu münden, und wobei der andere Durchlass (66) durch die äußere Wand, den Brückenabschnitt und die innere Wand hindurchtritt, um in die zentrale Bohrung zu münden.

2. Verteilerkopf nach Anspruch 1, wobei der einstückige Extrusionskörperabschnitt eine Extrusionsrichtung aufweist, die, wenn der Verteilerkopf mit dem Behälter zusammengebaut ist, zur Achse der Säule parallel ist;
wobei die Mittellinien der Einlass- und Auslassanschlüsse vorzugsweise senkrecht zur Extrusionsrichtung sind.

3. Verteilerkopf nach Anspruch 1 oder 2, wobei die Einlass- und Auslassanschlüsse in diametrisch entgegengesetzten Positionen auf dem Verteilerkopf angeordnet sind.

4. Verteilerkopf nach einem der vorangegangenen Ansprüche, umfassend eine versiegelbare Verbindungsanordnung zum lösbaren Zusammenbau des Verteilerkopfes mit dem Ende des Behälters.

5. Verteilerkopf nach einem der vorangegangenen Ansprüche, wobei dieser aus einer extrudierten Aluminiumlegierung ausgebildet ist.

6. Verteilerkopf nach einem der vorangegangenen Ansprüche, wobei dieser eine Dichtungskappe (76) zur Versiegelung der Seite des Extrusionskörperabschnitts, der distal vom Behälter ist, aufweist.

7. Fluidaufbereitungssäulenpaar, wobei jede einen länglichen Behälter umfasst, der im Gebrauch eine entsprechende Aufbereitungskomponente umfasst, sodass das Fluid durch Hindurchströmen durch die Aufbereitungskomponente aufbereitet werden kann, wobei das Säulenpaar ferner einen gemeinsamen Verteilerkopf nach einem der Ansprüche 1 bis 5 aufweist, der mit Enden der Säulen dichtend zusammengebaut ist,
wobei die Behälter an entgegengesetzten Seiten des Extrusionskörperabschnitts angeordnet sind, sodass die Säulen die Außenwand, den Einlassanschluss, den Auslassanschluss und die Innenströmungsführungsanordnung des Verteilerkopfes gemeinsam haben.

8. Mehrfachverteilerkopf für eine Vielzahl von Säulen, in denen jeweils Fluid durch Hindurchströmen durch eine entsprechende Aufbereitungskomponente aufbereitet wird, wobei der Mehrfachverteilerkopf eine Vielzahl der Verteilerköpfe nach einem der Ansprüche 1 bis 6 umfasst, sodass jeder Verteilerkopf im Gebrauch der mit einem Ende eines entsprechenden Behälters dichtend zusammengebaut ist, und wobei jeder Verteilerkopf eine(n) entsprechende(n) Außenwand, Einlassanschluss, Auslassanschluss und die Innenströmungsführungsanordnung aufweist;
wobei die Extrusionskörperabschnitte der Verteilerköpfe Bestandteile eines übergreifenden einstückigen Extrusionskörperabschnitts sind.

9. Mehrfachverteilerkopf nach Anspruch 8, wobei jeder Verteilerkopf die äußere und innere Wand aufweist, die radial beabstandet und im Wesentlichen rohrförmig sind und die durch einen Brückenabschnitt miteinander verbunden sind, und wobei die Einlass- und Auslassanschlüsse jedes Verteilerkopfes durch mechanisches Herstellen der entsprechenden Durchlässe ausgebildet sind; und wobei
jeweils zwischen benachbarten Säulen der Durchlass (92), der den Auslassanschluss für eine Säule ausbildet, von der benachbarten Säule gemeinsam benutzt wird, sodass er den Einlassanschluss für die benachbarte Säule ausbildet.

10. Mehrfachverteilerkopf nach Anspruch 8 oder 9, wobei einer oder mehrere zusätzliche mechanisch hergestellte Durchlässe im übergreifenden Extrusionskörperabschnitt ausgebildet sind, um einen Maschinenzugang bereitzustellen, um den oder die jeweiligen gemeinsamen Durchlässe auszubilden, wobei der/die zusätzliche(n) mechanisch bearbeitete(n) Durchlass/Durchlässe durch entsprechende Stopfen verschlossen sind.

11. Fluidaufbereitungssäule, umfassend:
einen länglichen Behälter, der im Gebrauch eine Aufbereitungskomponente umfasst, sodass Fluid durch Hindurchströmen durch die Aufbereitungskomponente aufbereitet wird; und
einen Verteilerkopf nach einem der Ansprüche 1 bis 6, wobei dieser mit einem Ende des Behälters dichtend zusammengebaut ist.

12. Vielzahl von Fluidaufbereitungssäulen, die jeweils einen länglichen Behälter, der im Gebrauch eine Aufbereitungskomponente umfasst, sodass Fluid durch Hindurchströmen durch die Aufbereitungskomponente aufbereitet wird, umfassen, wobei die Vielzahl von Fluidaufbereitungssäulen einen Mehrfachverteilerkopf nach einem der Ansprüche 8 bis 10, der mit den Enden der Behälter dichtend zusammengebaut ist, umfassen.

13. Verfahren zur Herstellung des Verteilerkopfes nach einem der Ansprüche 1 bis 6, umfassend:
Bereitstellen eines einstückigen Extrusionskörperabschnitts, der die Außenwand und die Innenströmungsführungsanordnung aufweist; und
mechanische Bearbeitung des Extrusionskörperabschnitts, um den Einlassanschluss und den Auslassanschluss auszubilden.

14. Verfahren zur Herstellung des Mehrfachverteilerkopfes nach einem der Ansprüche 8 bis 10, umfassend:
Bereitstellen eines übergreifenden einstückigen Extrusionskörperabschnitts, der die Außenwände und die Innenströmungsführungsanordnungen aufweist; und
mechanische Bearbeitung der übergreifenden Extrusionskörperabschnitte, um die Einlassanschlüsse und die Auslassanschlüsse auszubilden.

## Revendications

1. Tête de distributeur pour une colonne dans laquelle un fluide est conditionné par un écoulement à travers un composant de conditionnement, la colonne comprenant la tête de distributeur et un contenant allongé pour le composant de conditionnement, en utilisation la tête de distributeur étant assemblée de manière étanche à une extrémité du contenant ;
dans laquelle la tête de distributeur comporte une paroi externe (50), un orifice d'entrée (64) pour l'entrée de l'écoulement de fluide dans la colonne, un orifice de sortie (68) pour la sortie de l'écoulement de fluide hors de la colonne, et une formation de guidage d'écoulement interne pour guider l'écoulement entrant vers le composant de conditionnement et pour guider l'écoulement sortant à partir du composant de conditionnement, la formation de guidage d'écoulement maintenant en outre une séparation des écoulements entrant et sortant dans la colonne dans leur trajet vers et à partir du composant de conditionnement ;
**caractérisée en ce que** :
la paroi externe et la formation de guidage d'écoulement interne de la tête de distributeur sont des parties constitutives d'une section de corps extrudée unitaire ;
la section de corps extrudée comporte des parois externe (50) et interne (52) sensiblement tubulaires et espacées radialement qui sont reliées par une partie de liaison (54), la paroi interne formant un alésage central (60), la paroi externe formant la paroi externe de la tête de distributeur, et la paroi interne et la partie de liaison formant la formation de guidage d'écoulement interne ; et
les orifices d'entrée et de sortie sont formés en usinant des passages respectifs dans la paroi externe, l'un des passages (70) passant à travers la paroi externe pour s'ouvrir vers l'espace annulaire tronqué (62) formé entre les parois externe et interne, et l'autre passage (66) passant à travers la paroi externe, la partie de liaison et la paroi interne pour s'ouvrir vers l'alésage central.

2. Tête de distributeur selon la revendication 1, dans laquelle la section de corps extrudée unitaire a une direction d'extrusion qui, lorsque la tête de distributeur est assemblée sur le contenant, est parallèle à l'axe de la colonne ;
de préférence les lignes centrales des orifices d'entrée et de sortie étant perpendiculaires à la direction d'extrusion.

3. Tête de distributeur selon la revendication 1 ou 2, dans laquelle les orifices d'entrée et de sortie sont à des positions diamétralement opposées de part et d'autre de la tête de distributeur.

4. Tête de distributeur selon l'une quelconque des revendications précédentes qui comporte une formation de liaison scellable pour assembler de manière amovible la tête de distributeur avec l'extrémité du contenant.

5. Tête de distributeur selon l'une quelconque des revendications précédentes qui est constituée d'un alliage d'aluminium extrudé.

6. Tête de distributeur selon l'une quelconque des revendications précédentes qui comporte un capuchon d'étanchéité (76) pour sceller le côté de la section de corps extrudée à distance du contenant.

7. Paire de colonnes de conditionnement de fluide qui comprennent chacune un contenant allongé qui contient, en utilisation, un composant de conditionnement respectif de sorte qu'un fluide puisse être conditionné par un écoulement à travers le composant de conditionnement, la paire de colonnes comportant en outre une tête de distributeur partagée selon l'une quelconque des revendications 1 à 5 assemblée de manière étanche aux extrémités des colonnes ;
dans laquelle les conteneurs sont au niveau des côtés opposés de la section de corps extrudée de sorte que les colonnes partagent la paroi externe, l'orifice d'entrée, l'orifice de sortie, et la formation de guidage d'écoulement interne de la tête de distributeur.

8. Tête multi-distributeur pour une pluralité de colonnes dans chacune desquelles un fluide est conditionné par un écoulement à travers un composant de conditionnement respectif, la tête multi-distributeur incorporant une pluralité de têtes de distributeur selon l'une quelconque des revendications 1 à 6 de sorte que chaque tête de distributeur soit, en utilisation, assemblée de manière étanche à une extrémité d'un contenant respectif, et chaque tête de distributeur comporte une paroi externe, un orifice d'entrée, un orifice de sortie, et une formation de guidage d'écoulement interne respectifs ;
dans laquelle les sections de corps extrudées des têtes de distributeur sont des parties constitutives d'une section de corps extrudée unitaire globale.

9. Tête multi-distributeur selon la revendication 8, chaque tête de distributeur comportant des parois externe et interne sensiblement tubulaires et espacées radialement qui sont reliées par la partie de liaison, et les orifices d'entrée et de sortie de chaque tête de distributeur sont formés en usinant les passages respectifs ; et
dans laquelle, entre des colonnes voisines, le passage (92) formant l'orifice de sortie pour une colonne est partagé par la colonne voisine de sorte qu'il forme l'orifice d'entrée pour la colonne voisine.

10. Tête multi-distributeur selon la revendication 8 ou 9, dans laquelle un ou plusieurs passages usinés supplémentaires sont formés dans la section de corps extrudée globale pour fournir un accès à la machine pour former le ou chaque passage partagé, le ou les passages usinés supplémentaires étant fermés par des obturateurs respectifs.

11. Colonne de conditionnement de fluide comprenant :
un contenant allongé qui, en utilisation, contient un composant de conditionnement de sorte qu'un fluide puisse être conditionné par un écoulement à travers le composant de conditionnement ; et
une tête de distributeur selon l'une quelconque des revendications 1 à 6 qui est assemblée de manière étanche à une extrémité du contenant.

12. Pluralité de colonnes de conditionnement de fluide qui comprennent chacune un contenant allongé qui, en utilisation, contient un composant de conditionnement respectif de sorte qu'un fluide puisse être conditionné par un écoulement à travers le composant de conditionnement, la pluralité de colonnes de conditionnement comportant en outre une tête multi-distributeur selon l'une quelconque des revendications 8 à 10 assemblée de manière étanche aux extrémités des contenants.

13. Procédé de production de la tête de distributeur selon l'une quelconque des revendications 1 à 6 comprenant :
la fourniture d'une section de corps extrudée unitaire comportant la paroi externe et la formation de guidage d'écoulement interne ; et
l'usinage de la section de corps extrudée pour former l'orifice d'entrée et l'orifice de sortie.

14. Procédé de production de la tête multi-distributeur selon l'une quelconque des revendications 8 à 10 comprenant :
la fourniture d'une section de corps extrudée unitaire globale comportant les parois externes et les formations de guidage d'écoulement interne ; et
l'usinage de la section de corps extrudée globale pour former les orifices d'entrée et les orifices de sortie.
